# EUROPEAN PATENT APPLICATION

(11) **EP 1 701 209 A1**
(43) Date of publication of application: **13.09.2006**
(21) Application number: 04820693.2
(22) Date of filing: 06.12.2004
(51) Int. Cl.: G03B 21/62, G02F 1/13

(54) **LIQUID CRYSTAL SCREEN**

(30) Priority: 24.12.2003 JP 2003427014
(71) Applicant: Nippon Sheet Glass Company, Limited, Tokyo 105-8552 (JP)
(72) Inventor: YANO, Yuichi c/o Nippon Sheet Glass Company, Ltd., Minato-ku, Tokyo 105-8552 (JP)
(74) Representative: Kohler Schmid Möbus
(86) International application number: PCT/JP2004/018519
(87) International publication number: WO 2005/062119

(57) **Abstract**

A liquid crystal screen, which can be easily manufactured so that an increase in cost can be prevented, and enables incidence angle dependence of image quality to be eliminated. The liquid crystal screen 10 is comprised of a liquid crystal layer 14 that is comprised of a transparent polymer film 11 made of a latex having a plurality of voids therein and liquid crystal capsules 13 formed through the voids being filled with nematic liquid crystalline rod-like molecules 12, and a pair of PET films 15a and 15b that sandwich the liquid crystal layer 14 therebetween. A converted diameter D1 of the liquid crystal capsules 13 is set to not less than 1.5 µm, and the birefringence Δn of the nematic liquid crystalline rod-like molecules 12 is set to not less than 0.12.

## Description

### Technical Field

The present invention relates to a liquid crystal screen, and in particular relates to a transmission type liquid crystal screen onto which an image is projected from behind.

### Background Art

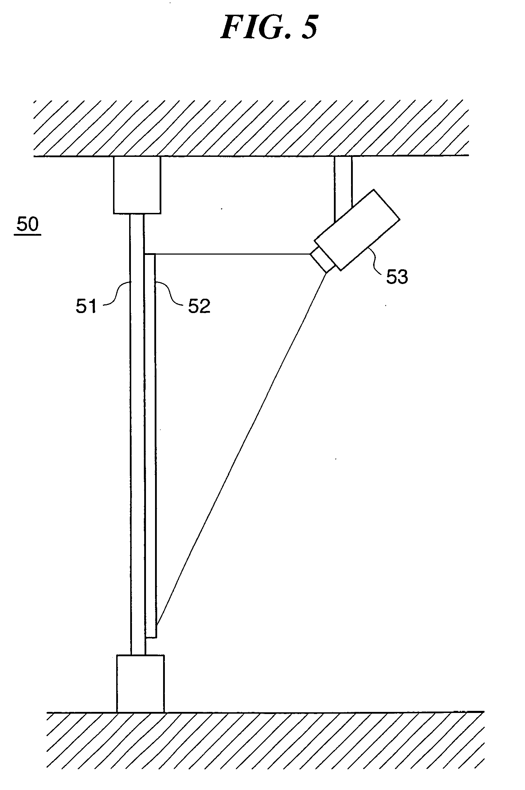

A display system 50 as shown in FIG. 5 comprised of a transmission type polarizing diffracting screen 52 made of plastic bonded to an inside surface of glass 51 of a show window, and an image projector 53 installed indoors that projects an image onto the polarizing diffracting screen 52 at a predetermined angle of incidence has been known from hitherto as an advertising medium used instead of a poster printed on paper. According to such a display system 50, the polarizing diffracting screen 52 diffracts and transmits the image projected from indoors so that the image appears on a surface of the polarizing diffracting screen 52 facing outdoors. A diffraction grating that horizontally polarizes and diffracts the image projected at the predetermined angle of incidence is formed in the polarizing diffracting screen 52 (see, for example, Published Patent Application of Japan (Kokai) No. 2002-107832).

Such a diffraction grating is generally constituted from many fine grooves arranged parallel to one another and at an equal spacing, and hence the diffraction grating in the polarizing diffracting screen 52 is manufactured through microfabrication, for example irradiation with a laser having a pulse width of not more than 10 to 12 seconds (see, for example, Published Patent Application of Japan (Kokai) No. 2003-195023).

However, because microfabrication is required in the manufacture of the diffraction grating as described above, there are problems that the manufacture takes much time, and moreover the yield is decreased and hence the cost increases.

Moreover, the values of the size and spacing of the grooves formed in the diffraction grating are fixed values, and hence there is a problem that only an image projected at the predetermined angle of incidence can be shown clearly, it not being possible to clearly show an image projected at another angle of incidence (hereinafter this problem is referred to as "the incidence angle dependence of image quality").

The present invention has been devised in view of the above problems. It is an object of the present invention to provide a liquid crystal screen, which can be easily manufactured so that an increase in cost can be prevented, and enables the incidence angle dependence of image quality to be eliminated.

### Disclosure of the Invention

To attain the above object, according to the present invention, there is provided a liquid crystal screen comprising a liquid crystal layer, and a pair of transparent substrates that sandwich the liquid crystal layer therebetween, wherein the liquid crystal layer has a plurality of voids therein, each of the voids being filled with a liquid crystal material.

In the present invention, preferably, the variation in transmittance defined as the difference between the maximum transmittance and the minimum transmittance among transmittances at wavelengths in a predetermined wavelength region of incident light for the liquid crystal layer is set to be within a predetermined range.

In the present invention, preferably, a converted diameter D1 of a sphere having the same volume as the volume of one of the voids is not less than 1.5 µm.

In the present invention, preferably, the birefringence Δn of the liquid crystal material is not less than 0.12.

In the present invention, preferably, the product of the converted diameter D1 and the birefringence Δn is in a range 0.24 µm ≤ D1×Δn ≤ 0.32 µm.

### Brief Description of the Drawings

FIG. 1 is a sectional view schematically showing the construction of a liquid crystal screen according to an embodiment of the present invention;
FIG. 2 is a flowchart showing a method of manufacturing the liquid crystal screen shown in FIG. 1;
FIG. 3 is a graph showing the transmittance of liquid crystal screens over a wavelength region from 380 nm to 800 nm;
FIG. 4 is a graph showing the relationship between the transmittance at various scattering angles from -50° to 50°, and the transmittance in a normal direction (0°) for each of the liquid crystal screens; and
FIG. 5 is a view schematically showing the construction of a conventional display system used as an advertising medium.

### Best Mode for Carrying Out the Invention

A liquid crystal screen of an embodiment of the present invention will now be described with reference to the drawings.

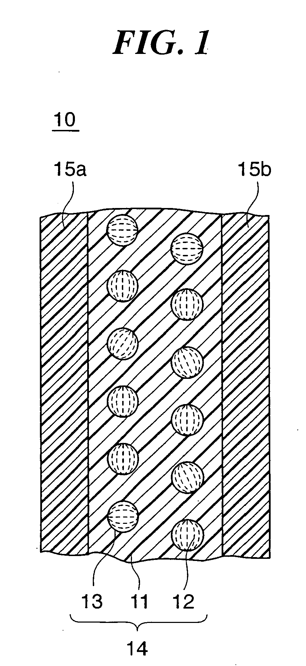

FIG. 1 is a sectional view schematically showing the construction of a liquid crystal screen according to an embodiment of the present invention.

As shown in FIG. 1, the liquid crystal screen 10 is comprised of a liquid crystal layer 14 that is comprised of a transparent polymer film 11 made of a latex having a plurality of voids therein and liquid crystal capsules 13 formed through the voids being filled with nematic liquid crystalline rod-like molecules 12, and a pair of polyethylene terephthalate films (hereinafter referred to as "PET films") 15a and 15b that sandwich the liquid crystal layer 14 therebetween.

In the liquid crystal screen 10, the nematic liquid crystalline rod-like molecules 12 line up along curved surfaces of walls of the liquid crystal capsules 13, the direction of alignment of the nematic liquid crystalline rod-like molecules 12 in each of the liquid crystal capsules 13 being random. As a result, the randomly aligned nematic liquid crystalline rod-like molecules 12 bend the optical path of incident light transmitted through the liquid crystal layer 14 in random directions. The liquid crystal screen 10 is thus milk-white color when an image or the like is not being projected thereon, whereas when an image or the like is being projected thereon, the incident light is scattered in random directions regardless of the angle of incidence of the image.

Moreover, in the liquid crystal screen 10, of the incident light scattered in random directions, some is transmitted through the liquid crystal screen 10 to the opposite surface to the surface on which the image is being projected, whereby the image appears on this opposite surface.

The above scattering of the incident light arises through the incident light being diffracted by the nematic liquid crystalline rod-like molecules 12, and hence incident light of a long wavelength at which diffraction does not readily occur is not readily scattered. As a result, light of long wavelength such as red light is preferentially transmitted, and hence the image appearing on the liquid crystal screen 10 may have a reddish tinge (hereinafter this is referred to as "the wavelength dependence of the hue of the transmitted light").

However, if the size of a converted diameter D1 of a sphere having the same volume as the volume of one of the liquid crystal capsules 13 is increased, then it becomes that the incident light is not readily transmitted through the liquid crystal screen 10 regardless of the wavelength.

To reduce the wavelength dependence of the hue of the transmitted for the liquid crystal screen 10, it is thus necessary to set the converted diameter D1 to not less than a predetermined value, thus keeping down the difference between the maximum transmittance and the minimum transmittance among the transmittances at wavelengths in a predetermined wavelength region of the incident light such as the visible region (hereinafter referred to as "the variation in the transmittance") to within a predetermined range, thereby preventing light of long wavelength from being preferentially transmitted.

Specifically, if the converted diameter D1 is not less than 1.5 µm, then the variation in the transmittance over the visible region from 380 to 780 nm which accounts for the majority of the wavelength region of the incident light can be kept down to not more than 3%, and hence the wavelength dependence of the hue of the transmitted light can be reduced. The transmittance generally increases as the wavelength increases, and hence the variation in the transmittance over the region from 380 to 780 nm is the difference between the transmittance at 780 nm and the transmittance at 380 nm.

Furthermore, there is a correlation between the converted diameter D1 and the birefringence Δn of the nematic liquid crystalline rod-like molecules 12, in general it being necessary to increase the set value of the converted diameter D1 to reduce the birefringence Δn. Specifically, to achieve a birefringence Δn of 0.16, the converted diameter D1 must be set in a range of 1.5 µm to 2.0 µm, and to achieve a birefringence Δn of 0.12, the converted diameter D1 must be set in a range of 2.0 µm to 2.7 µm.

Moreover, the incident light is scattered in random directions as described above, and the transmittance varies with the scattering direction, specifically the transmittance decreases as the scattering direction widens out from the normal direction to the surface of the liquid crystal screen 10, i.e. as the scattering angle increases. As a result, the image appearing on the liquid crystal screen 10 may become unclear depending on the direction from which an observer views the liquid crystal screen 10 (hereinafter this is referred to as "the scattering angle dependence of the transmittance").

However, the greater the birefringence Δn of the nematic liquid crystalline rod-like molecules 12, the lower the difference tends to be between the transmittance at a large scattering angle and the transmittance in the normal direction.

To reduce the scattering angle dependence of the transmittance for the liquid crystal screen 10, the birefringence Δn must thus be set to not less than a predetermined value.

Specifically, if the birefringence Δn of the nematic liquid crystalline rod-like molecules 12 is not less than 0.12, then the scattering angle dependence of the transmittance can be reduced to a sufficient level for securing functionality of the liquid crystal screen.

Accordingly, for the liquid crystal screen 10, the converted diameter D1 is set to not less than 1.5 µm and the birefringence Δn is set to not less than 0.12, in particular the product of the converted diameter D1 and the birefringence Δn is set to be in a range of 0.24 µm to 0.32 µm.

Next, a description will be given of a method of manufacturing the liquid crystal screen 10.

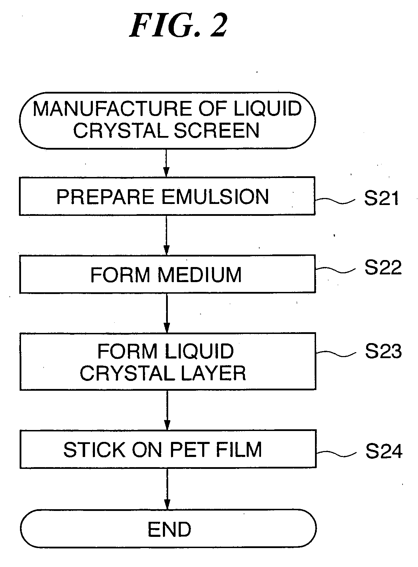

FIG. 2 is a flowchart showing a method of manufacturing the liquid crystal screen 10 shown in FIG. 1.

As shown in FIG. 2, first, nematic liquid crystals and an aqueous phase are mixed together to prepare an emulsion, and the prepared emulsion is added to a latex, or else nematic liquid crystals and a latex are directly mixed together to prepare an emulsion (step S21). At this time, to obtain stable liquid crystal particles, it is preferable to add a surfactant to the emulsion. The mixing together of the nematic liquid crystals and the aqueous phase or the latex is carried out using a mixer such as a blender or a colloid mill. The converted diameter D1 of the liquid crystal capsules 13 can be controlled to a desired value through the rotational speed of the mixer. Here, the converted diameter D1 is set to 2.0 µm; in the case that the converted diameter D1 is 2.0 µm, the birefringence Δn of the nematic liquid crystals will be in a range of 0.12 to 0.16.

Next, a crosslinking agent for crosslinking the latex in the prepared emulsion is added to the emulsion to form a medium (step S22). The amount added of the crosslinking agent is set, in correspondence with the amount of solid contents in the latex, to be an amount capable of crosslinking all of the latex in terms of solids.

The medium thus formed is then applied onto a 175 µm-thick PET film 15a using suitable means such as a knife blade, and the applied medium is then dried, whereby crosslinking of the latex by the crosslinking agent is made to proceed, and hence a liquid crystal layer 14 is formed (step S23).

Next, a PET film 15b is stuck onto the liquid crystal layer 14 thus formed (step S24), thus completing the manufacturing process.

According to the liquid crystal screen of the present embodiment, the liquid crystal screen is comprised of the liquid crystal layer 14 that is comprised of the transparent polymer film 11 made of a latex having a plurality of voids therein and the liquid crystal capsules 13 formed through the voids being filled with the nematic liquid crystalline rod-like molecules 12, and the pair of PET films 15a and 15b that sandwich the liquid crystal layer 14 therebetween. As a result, manufacture is easy, and hence an increase in cost can be prevented. Moreover, the nematic liquid crystalline rod-like molecules 12, which are aligned in a random direction in each of the liquid crystal capsules 13, bend the optical path of incident light in random directions, and as a result the incident light can be scattered in random directions regardless of the angle of incidence of an image, whereby the incidence angle dependence of image quality can be eliminated.

Moreover, according to the liquid crystal screen 10 described above, the variation in the transmittance of the incident light over a visible region is set to be within a predetermined range, specifically the converted diameter D1 is set to not less than 1.5 µm so that the variation in the transmittance over the visible region from 380 to 780 nm which accounts for the majority of the wavelength region of the incident light is kept down to not more than 3%. As a result, the wavelength dependence of the hue of the transmitted light can be reduced, and hence light of long wavelength being preferentially transmitted so that the image appearing on the liquid crystal screen 10 has a reddish tinge can be suppressed to within a range so as not to be a problem in practice.

Furthermore, according to the liquid crystal screen 10 described above, the birefringence Δn of the nematic liquid crystalline rod-like molecules 12 is not less than 0.12. As a result, the difference between the transmittance at a large scattering angle and the transmittance in the normal direction is reduced, and hence the scattering angle dependence of the transmittance can be reduced to a sufficient level for securing functionality of the liquid crystal screen.

Moreover, according to the liquid crystal screen 10 described above, the product of the converted diameter D1 and the birefringence Δn is set to be in a range of 0.24 µm to 0.32 µm. As a result, both a reduction in the scattering angle dependence of the transmittance and a reduction in the wavelength dependence of the hue of the transmitted light can be achieved.

In the screen 10 described above, nematic liquid crystals are used as the liquid crystal material. However, cholesteric liquid crystals, smectic liquid crystals, or the like may be used instead of nematic liquid crystals.

Moreover, in the liquid crystal screen 10, PET films 15 are used as the transparent substrates. However, glass sheets, or else polymer films (polycarbonate films, polyacrylonitrile films, polyacrylate films, polymethacrylate films, polymethyl methacrylate films, etc.) or the like may be used instead of PET films.

Furthermore, for the polymer film in the liquid crystal screen 10, a material of any type, inorganic or organic, may be used, so long as the nematic liquid crystals can be held in this material in the form of a plurality of capsules.

Next, an example of the present invention will be described in detail.

### Example 1

0.5 wt% of an Igepal CO-610 surfactant (made by GAF Corporation) was added to ZLI-1840 liquid crystals (made by Merck & Co., Inc., Δn = 0.143), the liquid crystals to which the surfactant had been added were added to NeoRez R-967 (made by AstraZeneca PLC) containing 40 wt% of latex particles such that the liquid crystal proportion was 0.62, and then stirring was carried out for 10 minutes at 1000 revs using a homogenizer, thus obtaining an emulsion. Next, while gently mixing the emulsion, a CX-10 crosslinking agent (made by AstraZeneca PLC) was added in a proportion of 3 wt% to the emulsion. The emulsion to which the crosslinking agent had been added was then applied onto a PET film using a doctor blade, and drying was carried out, thus obtaining a liquid crystal layer. The thickness of the liquid crystal layer was 20 µm.

Then, another PET film was stuck onto the liquid crystal layer, thus obtaining a liquid crystal screen.

For the above liquid crystal screen, the converted diameter D1 of the liquid crystal capsules was 2.0 µm, and D1×Δn was 0.286 µm.

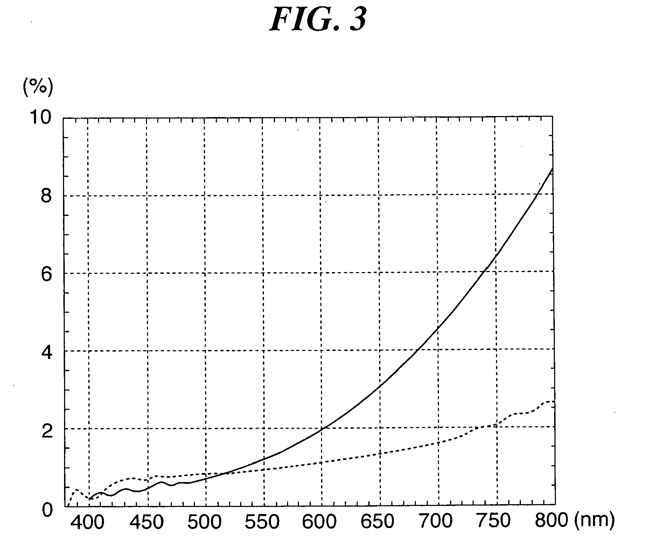

Using the liquid crystal screen, the transmittance of the liquid crystal screen over a wavelength region from 380 nm to 800 nm was measured using an MCPD-100 (28C) multifunctional multichannel spectrophotometer (made by Otsuka Electronics Co., Ltd.). The results are shown by the dashed line on the graph of FIG. 3, described below.

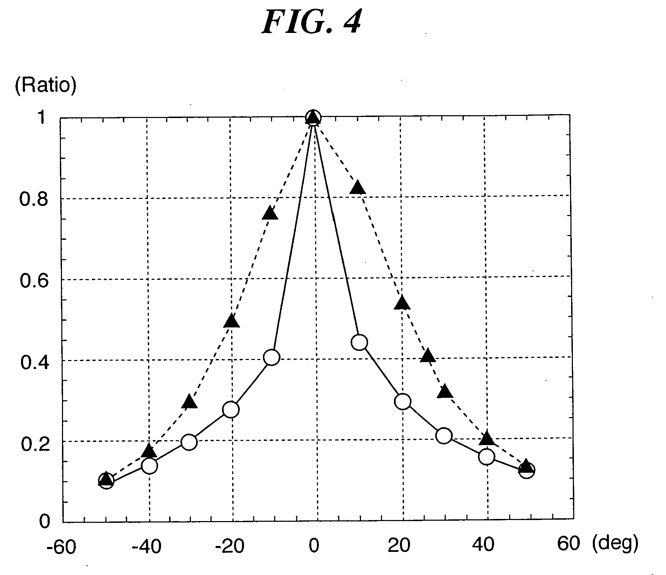

Moreover, the transmittance at scattering angles from -50° to 50° was measured. The ratio of the transmittance at each scattering angle to the transmittance in a normal direction (0°) (hereinafter referred to as "the scattering transmittance ratio") is shown by the dashed line on the graph of FIG. 4, described below.

### Comparative Example 1

A liquid crystal screen was obtained using the same manufacturing method as in Example 1 described above, except that the rotational speed of the homogenizer was set to a different value to that in Example 1. For the liquid crystal screen obtained, the converted diameter D1 of the liquid crystal capsules was 1.0 µm, and D1×Δn was 0.143.

Using this liquid crystal screen, the transmittance over a wavelength region from 380 nm to 800 nm was measured as for Example 1 described above. The results are shown by the full line on the graph of FIG. 3, described below. Moreover, the transmittance at scattering angles from -50° to 50° was measured. The scattering transmittance ratio is shown by the full line on the graph of FIG. 4, described below.

FIG. 3 is a graph showing the transmittance of the liquid crystal screens over a wavelength region from 380 nm to 800 nm.

In FIG. 3, the axis of abscissas shows the wavelength of incident light, and the axis of ordinates shows the transmittance at each wavelength.

It can be seen from the graph of FIG. 3 that for the liquid crystal screen of Comparative Example 1, the transmittance increases at long wavelengths, and in particular the transmittance exceeds 8% at a wavelength of 800 nm and above, and the difference between the transmittance at a wavelength of 380 nm and the transmittance at a wavelength of 800 nm is also approximately 8%. As a result, for the liquid crystal screen of Comparative Example 1, an image has a reddish tinge. On the other hand, for the liquid crystal screen of Example 1, there is no such sudden increase in the transmittance at long wavelengths, in particular over the wavelength region from 380 nm to 780 nm, and the variation in the transmittance, i.e. the difference between the transmittance at a wavelength of 780 nm, which is the maximum transmittance, and the transmittance at a wavelength of 380 nm, which is the minimum transmittance, is kept down to not more than 3%. As a result, the variation in the transmittance can be kept down to within a range such that there are no problems in practice, i.e. the wavelength dependence of the hue of the transmitted light can be reduced. Accordingly, it was found that for the liquid crystal screen of Example 1, an image does not have a reddish tinge.

FIG. 4 is a graph showing the relationship between the transmittance at various scattering angles from -50° to 50°, and the transmittance in the normal direction (0°) for each of the liquid crystal screens.

In FIG. 4, the axis of abscissas shows the scattering angle of scattered light, and the axis of ordinates shows the scattering transmittance ratio.

It can be seen from the graph of FIG. 4 that the value of the scattering transmittance ratio for the liquid crystal screen of Example 1 exceeds the value of the scattering transmittance ratio for the liquid crystal screen of Comparative Example 1 over the scattering angle range from -50° to 50°, and hence the scattering angle dependence of the transmittance is reduced. Accordingly, it was found that for the liquid crystal screen of Example 1, when an image is projected thereon from a light source such as rear projection, loss of clarity of the image at edges of the screen can be prevented.

### Industrial Applicability

According to the present invention, a liquid crystal screen is comprised of a liquid crystal layer, and a pair of transparent substrates that sandwich the liquid crystal layer therebetween, wherein the liquid crystal layer has a plurality of voids therein, each of the voids being filled with a liquid crystal material. As a result, manufacture is easy, and hence an increase in cost can be prevented. Moreover, the liquid crystal material filling the voids bends the optical path of incident light in random directions, and as a result the incident light can be scattered in random directions regardless of the angle of incidence, whereby the incidence angle dependence of image quality can be eliminated.

According to the present invention, the variation in transmittance defined as the difference between the maximum transmittance and the minimum transmittance among transmittances at wavelengths in a predetermined wavelength region of the incident light for the liquid crystal layer is set to be within a predetermined range. As a result, the wavelength dependence of the hue of transmitted light can be reduced, and hence light of long wavelength being preferentially transmitted so that the liquid crystal screen has a reddish tinge can be prevented.

According to the present invention, a converted diameter D1 of a sphere having the same volume as the volume of one of the voids is not less than 1.5 µm. As a result, it becomes that the incident light is not readily transmitted through the liquid crystal screen regardless of the wavelength. The variation in the transmittance over the visible region from 380 to 780 nm which accounts for the majority of the wavelength region of the incident light can thus be kept down to not more than 3%, and hence the wavelength dependence of the hue of the transmitted light can be reduced. Light of long wavelength being preferentially transmitted so that the liquid crystal screen has a reddish tinge can thus be suppressed to within a range so as not to be a problem in practice.

According to the present invention, the birefringence Δn of the liquid crystal material is not less than 0.12. As a result, the difference between the transmittance at a large scattering angle and the transmittance in a direction parallel to the incident light is reduced, and hence the scattering angle dependence of the transmittance can be reduced.

According to the present invention, the product of the converted diameter D1 and the birefringence Δn is in a range 0.24 µm ≤ D1×Δn ≤ 0.32 µm. As a result, both a reduction in the scattering angle dependence of the transmittance and a reduction in the wavelength dependence of the hue of the transmitted light can be achieved.

## Claims

1. A liquid crystal screen comprising a liquid crystal layer, and a pair of transparent substrates that sandwich said liquid crystal layer therebetween, the liquid crystal screen **characterized in that**:
said liquid crystal layer has a plurality of voids therein, each of said voids being filled with a liquid crystal material.

2. A liquid crystal screen as claimed in claim 1, **characterized in that** a variation in transmittance defined as a difference between a maximum transmittance and a minimum transmittance among transmittances at wavelengths in a predetermined wavelength region of incident light for said liquid crystal layer is set to be within a predetermined range.

3. A liquid crystal screen as claimed in claim 2, **characterized in that** a converted diameter D1 of a sphere having a same volume as a volume of one of said voids is not less than 1.5 µm.

4. A liquid crystal screen as claimed in claim 3, **characterized in that** a birefringence Δn of said liquid crystal material is not less than 0.12.

5. A liquid crystal screen as claimed in claim 4, **characterized in that** a product of the converted diameter D1 and the birefringence Δn is in a range 0.24 µm ≤ D1×Δn ≤ 0.32 µm.

## Amended claims

### Amended claims under Art. 19.1 PCT

1. (Cancelled)

2. (Amended) A liquid crystal screen comprising a liquid crystal layer, and a pair of transparent substrates that sandwich said liquid crystal layer therebetween, the liquid crystal screen **characterized in that**:
said liquid crystal layer has a plurality of voids therein;
each of said voids is filled with a liquid crystal material; and
a variation in transmittance defined as a difference between a maximum transmittance and a minimum transmittance among transmittances at wavelengths in a predetermined wavelength region of incident light for said liquid crystal layer is set to be within a predetermined range.

3. A liquid crystal screen as claimed in claim 2, **characterized in that** a converted diameter D1 of a sphere having a same volume as a volume of one of said voids is not less than 1.5 µm.

4. A liquid crystal screen as claimed in claim 3, **characterized in that** a birefringence Δn of said liquid crystal material is not less than 0.12.

5. A liquid crystal screen as claimed in claim 4, **characterized in that** a product of the converted diameter D1 and the birefringence Δn is in a range 0.24 µm ≤ D1×Δn ≤ 0.32 µm.
